# EUROPÄISCHE PATENTSCHRIFT

(11) **EP 2 456 737 B1**
(45) Veröffentlichungstag und Bekanntmachung des Hinweises auf die Patenterteilung: **19.04.2017**
(21) Anmeldenummer: 10734701.5
(22) Anmeldetag: 16.07.2010
(51) Int. Cl.: C05G 3/08, C05G 3/00

(54) **ZUSAMMENSETZUNGEN, BESTEHEND AUS EINEM HARNSTOFFBASIERTEN DÜNGEMITTEL, EINEM PHOSPHORSÄUREAMIDDERIVATE ALS UREASEINHIBITOR UND EINES PARAFFINBASIERTES WACHSES, SOWIE VERFAHREN ZU DESSEN HERSTELLUNG**
COMPOSITIONS CONSISTING OF A UREA-BASED FERTILIZER, A PHOSPHORIC ACID AMIDE DERIVATIVE AS UREASE INHIBITOR AND PARAFFIN-BASED WAX, AND PROCESS FOR THE PRODUCTION THEREOF.
COMPOSITIONS CONSTITUÉES D UN ENGRAIS À BASE D URÉE, DE DÉRIVÉS DE L AMIDE D ACIDE PHOSPHORIQUE EN TANT QU INHIBITEUR DE L URÉASE ET D UNE CIRE PARAFFINIQUE, ET PROCÉDÉ POUR LEUR PRÉPARATION

(30) Priorität: 23.07.2009 DE 102009034433
(43) Veröffentlichungstag der Anmeldung: 30.05.2012
(73) Patentinhaber: SKW STICKSTOFFWERKE PIESTERITZ GmbH, 06886 Lutherstadt Wittenberg (DE)
(72) Erfinder: HUCKE, André, 06889 Wittenberg (DE); NICLAS, Hans-Joachim, 12435 Berlin (DE); REINHARDT, Petra, 06847 Dessau (DE); RADICS, Ute, 06888 Dabrun (DE)
(74) Vertreter: Schneider, Michael
(86) Internationale Anmeldenummer: PCT/EP2010/004364
(87) Internationale Veröffentlichungsnummer: WO 2011/009572

(56) Entgegenhaltungen:
- WO-A1-00/58317
- WO-A1-2007/016788
- DE-A1- 10 342 551
- GB-A- 2 164 640
- US-A- 3 252 786
- US-A- 5 256 181

## Beschreibung

### Stand der Technik

Die Erfindung betrifft eine Düngemittelzusammensetzung, enthaltend harnstoffbasierte Prills oder Granalien, mindestens ein Phosphorsäureamidderivat als Ureaseinhibitor auf der Oberfläche der Prills oder Granalien und ein Formulierungsmittel, das parafinbasierte Wachse und pflanzliche Triglyceride umfasst, zur Imprägnierung der Prills- oder Granalienoberfläche.

Harnstoff ist ein ursprünglich biogenes Stoffwechselprodukt, das durch das Enzym Urease in Ammoniak und Kohlendioxid gespalten wird. Die Reaktion verläuft außerordentlich schnell und effektiv und ist somit für N-Verluste bei der Anwendung von harnstoffbasierten Düngemitteln verantwortlich. Diese sind besonders hoch, wenn der Boden nicht über eine ausreichende Sorptionskraft verfügt, um das frei gewordene Ammoniak in Form von Ammoniumionen zu binden. Dadurch gehen der Landwirtschaft jährlich beträchtliche Mengen an Stickstoff verloren, die auf diese Weise zur Umweltbelastung beitragen und andererseits einen erhöhten Düngemittelbedarf erfordern.

Da Harnstoff das Stickstoffdüngemittel mit dem prozentual größten N-Gehalt und der weltweit mit Abstand dominierende N-Dünger ist, wird die Suche nach praktikablen Lösungen zur Reduzierung der ureasebedingten N-Verluste verständlich. Um dieses Ziel zu erreichen, ist eine Vielzahl von Lösungen vorgeschlagen worden. Zu nennen sind in diesem Zusammenhang die saure Umhüllung von Harnstoffprills oder -granalien, um auf diese Weise entstehenden Ammoniak durch Salzbildung abfangen zu können oder das Coating mit Substanzen, wodurch Harnstoff verlangsamt freigesetzt wird und somit das entstehende Ammoniak problemlos »abgepuffert« werden kann. Der Einsatz von Ureaseinhibitoren ist eine effektive Möglichkeit, die unter Normalbedingungen außerordentlich schnell verlaufende enzymatische Harnstoff-Hydrolyse deutlich zu verlangsamen. Durch die Verzögerung dieser Enzymreaktion kann der Düngeharnstoff unzersetzt in tiefere Bodenschichten penetrieren.

Damit sind Ammoniakverluste durch das Sorptionspotential der darüber befindlichen Bodenschichten, anders als an der Bodenoberfläche, nahezu ausgeschlossen. Au-ßerdem gelingt es auf diesem Wege, Harnstoff und harnstoffhaltige Dünger für leichte Bodenstandorte verlustfrei zur Anwendung zu bringen.

Aus der Literatur ist bekannt, dass bestimmte organische, aber auch anorganische Verbindungen die ureasekatalysierte Harnstoff-Hydrolyse zu hemmen vermögen (vgl. S. Kiss, M. Simihäian, Improving Efficiency of Urea Fertilizers by Inhibition of Soil Urease Activity, Kluwer Academic Publishers (2002)).

Mit der Entdeckung der Phosphorsäureesterdiamide (DD 122 177) sind Verbindungen gefunden worden, die äußerst effektive Ureaseinhibitoren darstellen. Ähnlich wirksam ist eine Reihe von Derivaten des Phosphorsäuretriamids einschließlich des Grundkörpers (vgl. bspw. US 4,540,428, US 4,676,822, US 4,696,693, US 4,537,614, US 4,517,004, EP 0 119 487), von denen als einziger Vertreter bisher das N-(n-Butyl)thiophosphorsäuretriamid (NBTPT) kommerzialisiert wurde (IMC AGRICO Corp., Produktbezeichnung Agrotain®).

Vorteilhaft ist die Vermarktung von Düngemitteln, die ab Werk mit einem geeigneten Phosphorsäureamidderivat zur Unterdrückung der ureasekatalysierten Harnstoffhydrolyse behandelt sind. Voraussetzung dafür ist, dass der jeweilige Ureaseinhibitor im Zeitraum von der Herstellung des Düngemittels bis zu dessen Ausbringung stabil ist, d. h., der Wirkstoff sollte auch bei wechselnden klimatischen Bedingungen (Temperatur, Luftfeuchte) in oder auf dem Düngemittel mindestens drei Monate unverändert bleiben. Viele der in Frage kommenden Phosphorsäureamidderivate sind jedoch relativ hydrolyseanfällig, wodurch vor allem ihre Wirkungsdauer und somit ihre Anwendbarkeit erheblich eingeschränkt ist.

Darüber hinaus müssen Feststoffdünger mit zugesetzten Ureaseinhibitoren - ebenso wie Dünger ohne Zusatzstoffe - als stabile, abriebfeste und lose in unklimatisierten Lagerhallen über mehrere Monate verbackungsfrei zu lagernde Granalien bereitgestellt werden.

Zur Kombination eines Ureaseinhibitors mit dem Harnstoff bietet sich die Zugabe des Inhibitors zur Harnstoffschmelze beim Prill- oder Granulierungsprozess an. Allerdings zersetzen sich dabei viele Inhibitoren aufgrund der hohen Temperaturen und der besonderen Bedingungen der Schmelze oder sind innerhalb der fertigen Prills oder Granalien nicht lagerstabil.

Ein einfaches Vermischen der Prills oder Granalien mit dem Ureaseinhibitor ist ungeeignet, da so eine gleichmäßige Verteilung im Düngemittel nicht gegeben ist und bei Transportprozessen eine Trennung von Granulat und Inhibitor erfolgen kann. Darüber hinaus ist der Inhibitor so nicht ausreichend gegen Feuchtigkeit und anderen Umwelteinflüssen geschützt. Im Fall des kommerziell eingesetzten N-(n-Butyl)thio-phosphorsäuretriamids (NBTPT) besitzt der industriell hergestellte Wirkstoff aufgrund von Verunreinigungen eine wachsartige und pastöse Konsistenz, so dass ein Vermischen mit dem Düngemittel von vornherein ausgeschlossen ist.

Da es notwendig ist, ein Düngemittel zum Schutz gegen Verbacken oder Wasseraufnahme oberflächig zu konditionieren, bietet sich die Aufbringung des Wirkstoffes zusammen mit dem Konditionierungsmittel an.

Die oberflächig aufgebrachte Schicht des Konditionierungsmittels schützt die Feststoffdüngerteilchen bei Transport und Lagerung in nicht klimatisierten Räumen vor Umwelteinflüssen, z. B. vor der Aufnahme von Feuchte aus der Umgebungsluft.

Diese Schutzschicht ist für die Erhaltung der Qualität der Feststoffdünger über mehrere Monate auch bei ungünstigen klimatischen Gegebenheiten zwingend erforderlich. In Abhängigkeit von der chemischen Zusammensetzung der Feststoffdünger und ihrer Formgebung, beispielsweise geprillt oder granuliert, variiert die sogenannte kritische Feuchte der Produkte. Die kritische Feuchte der Dünger ist eine temperaturabhängige charakteristische Größe. Es ist die Feuchte bei definierter Temperatur bei der weder Feuchte aufgenommen wird noch Trocknung des Produktes erfolgt. Für granulierten Harnstoff liegt die kritische Feuchte bei 70-75 % (30 °C), für Ammoniumsulfat bei 75 % (30 °C) (Fertilizer Manual S. 485, Kluwer Academic Publishers (1998)). Gemische aus unterschiedlichen Düngemitteln haben gewöhnlich eine niedrigere kritische Feuchte. So ist diese bei einem Mischdünger bestehend aus Harnstoff und Ammoniumsulfat im Verhältnis zwischen 1:1 bis 3:1 auf 55 % (30 °C) reduziert. Das heißt, dass diese Düngemittel viel leichter Wasser aufnehmen.

Solche Granalien müssen unbedingt mit einer hydrophobierenden Schicht umhüllt, d. h. konditioniert werden. Gleichzeitig kann mit dem Konditionierungsmittel einem Verbacken des Düngemittels entgegengewirkt werden.

Als Konditionierungsmittel sind eine Reihe verschiedener Stoffe im Einsatz, wie z. B. Mineralöle, Paraffinöle und -wachse, längerkettige Alkylamine und Alkylarylsulfonate (E. A. Bijpost, J. G. Korver: Proceedings of the International Fertilizer Society 584 (2006)). Da ein gutes Antibackmittel meist unzureichende hydrophobierende Eigenschaften aufweist und umgekehrt, werden Kombinationen mehrerer Stoffe verwendet.

US 5 256 181 A beschreibt die Ummantelung von Harnstoff mit ionischen und kovalent vernetzten sulfonierten Poymeren. WO 00/58317 A1 offenbart (Thio)Phosphoryl-triamide als Ureaseinhibitoren. DE 103 42 551 A1 beschreibt ein Verfahren zur Herstellung von Dicyandiamid und 1,2,4-Triazol als Nitrifikationshemmer enthaltenden Düngemittelgranulaten auf Harnstoffbasis. GB 2 164 640 A offenbart Beschichtungen, Binde- und Versiegelungsmaterialien für Dünger und andere Substanzen. WO 2007/016788 A1 betrifft Harnstoffdünger mit verzögerter Freisetzung mit einer Ummantelung aus epoxidierten Fettsäuretriglyceridölen. US 3 252 786 A offenbart Harnstoffdünger mit verzögerter Freisetzung mit einer Ummantelung aus Petroleumwachs.

Die eingesetzten Konditionierungsmittel sollten bei vertretbaren Aufwandmengen toxikologisch unbedenklich und biologisch abbaubar sein. Außerdem müssen diese preisgünstig verfügbar und mit geringem Aufwand applizierbar sein.

Als Hydrophobierungsmittel wurden häufig Mineralöle eingesetzt, die aber aufgrund des Gehaltes von polycyclischen aromatischen Kohlenwasserstoffen weder toxikologisch unbedenklich noch leicht biologisch abbaubar sind. Deshalb werden verstärkt auch die leichter bioabbaubaren und toxikologisch unbedenklichen pflanzlichen Öle verwendet. Allerdings neigen diese aufgrund ihrer Doppelbindungen zu Oxidations-und Polymerisationsreaktionen und sind aufgrund der polaren Estergruppe häufig schlechtere Hydrophobierungsmittel, so dass sie in Kombination mit Paraffinen Anwendung finden (WO 0138263; US 6355083).

Neben den Antiback- und Hydrophobierungseigenschaften müssen die jeweiligen Konditionierungsmittel auch möglichst gleichmäßig und vollständig auf das Düngemittel aufziehen, um die gewünschte Wirkung zu erzielen.

Es ist also nicht trivial, ein Konditionierungsmittel zu finden, was allen Ansprüchen gerecht wird. Bei der Applikation eines Wirkstoffes wie z. B. eines Ureaseinhibitors zusammen mit dem Konditionierungsmittel auf die Oberfläche des harnstoffbasierten Düngemittels ergeben sich jedoch noch zusätzliche Probleme. Einerseits muss der Wirkstoff selbst auf dem Düngemittel gleichmäßig verteilt und mindestens drei Monate unverändert lagerfähig sein und andererseits darf die Anwesenheit des Wirkstoffes sich nicht nachteilig auf die Antiback- und Hydrophobierungswirkung des Konditionierungsmittels auswirken.

So sind die als Antibackmittel verwendeten längerkettigen Alkylamine im Fall von phosphorsäureamidbasierten Ureaseinhibitoren ungeeignet, da Amine nukleophil an diese angreifen und zu einem beschleunigten Abbau der Wirkstoffe führen. Auch wasserbasierte Antibackmittel, wie z. B. wässrige Polyvinylalkohollösungen, sind nicht geeignet, da bei der erforderlichen Trocknung des Düngemittels bereits eine partielle Hydrolyse des Phosphorsäureamids erfolgt. Darüber hinaus können freies Ammoniak im Düngemittel sowie eingesetzte Hilfsstoffe sich negativ auf die Wirkstoffstabilität auswirken. Neben der Antiback- und Hydrophobierungswirkung muss das Konditionierungsmittel also auch den Wirkstoff sowohl gegen Luftfeuchte als auch gegen aus dem Düngemittel resultierende schädliche Einflüsse schützen.

Trotz ihrer eingeschränkten Stabilität sind Phosphorsäureamidderivate aufgrund ihrer ausgezeichneten Hemmwirkung die Ureaseinhibitoren der Wahl zur Stickstoffstabilisierung harnstoffbasierter Düngemittel.

Im Fall des *N*-(n-Butyl)thiophosphorsäuretriamids (NBTPT) wird eine flüssige Formulierung aus N-Methylpyrrolidon und Glykolen eingesetzt (Handelsname AGROTAIN®). Abgesehen davon, dass der Einsatz von N-Methylpyrrolidon aus toxikologischer Sicht fragwürdig ist (Verdacht auf carcinogene und teratogene Wirkung), ist der Wirkstoff auf mit dieser Formulierung behandelten Granalien nur eingeschränkt lagerstabil und wird besonders bei erhöhter Temperatur rasch abgebaut. Darüber hinaus enthalten die eingesetzten Glykole oft etwas Wasser oder nehmen leicht Wasser auf, wodurch die Stabilität des NBTPT zusätzlich negativ beeinflusst wird. Außerdem schützen die Glykole den Prill oder die Granalie selbst nicht gegen Wasseraufnahme und Verbacken, was zur Verschlechterung der Lagereigenschaften des Düngemittels führt. Gleiches gilt für den Einsatz von höhersiedenden Aminen, die als Zusatz zur Erhöhung der Stabilität von NBTPT auf harnstoffbasierten Düngemitteln vorgeschlagen wurden (DE 10 2007 062 614).

### Gegenstand der Erfindung

Der vorliegenden Erfindung lag daher die Aufgabe zugrunde, ein Formulierungsmittel zur Applikation von Phosphorsäureamidderivaten auf die Oberfläche von harnstoffbasierten Prills oder Granalien zu finden, das die genannten Nachteile des Standes der Technik nicht aufweist.

### Beschreibung der Erfindung

Diese Aufgabe wurde erfindungsgemäß dadurch gelöst, dass zur Imprägnierung der Granalienoberfläche harnstoffhaltiger Düngemittel ein Formulierungsmittel eingesetzt wird, das paraffinbasierte Wachse und pflanzliche Triglyceride umfasst. Es hat sich nämlich überraschenderweise gezeigt, dass mit Hilfe eines Formulierungsmittels, das paraffinbasierte Wachse und pflanzliche Triglyceride umfasst, eine Vielzahl unterschiedlich substituierter Phosphorsäureamidderivate nicht nur einfach und gleichmäßig auf die Oberfläche harnstoffhaltiger Düngemittel aufgebracht werden können, sondern dass diese auch bei längerer Lagerung der Düngemittel unter praxisrelevanten Bedingungen eine überraschend gute Stabilität aufweisen und außerdem gegen Abrieb geschützt werden. So können sogar Düngemittel mit dem hydrolyseempfindlichen *N*-(n-Butyl)thiophosphorsäuretriamid (NBTPT) ohne Zusatz der in DE 10 2007 062 614 beschriebenen Stabilisierungsmittel (höhersiedende Amine) lange Zeit ohne nennenswerten Wirkstoffabbau gelagert werden. Unter optimalen Bedingungen sind sogar Lagerzeiten von bis zu einem Jahr kein Problem (vgl. NBTPT Beispiel 4). Aber auch in unklimatisierten Lagerhallen zeigen die erfindungsgemäßen Phosphorsäureamidderivate eine hervorragende Lagerstabilität auf harnstoffbasierten Düngemitteln.

In den erfindungsgemäßen Düngemittelzusammensetzungen weisen nicht nur die Wirkstoffe eine gute Lagerstabilität auf. Auch das harnstoffbasierte Düngemittel selbst bleibt unter praxisrelevanten klimatischen Bedingungen gut lagerfähig. Durch die erfindungsgemäße Formulierung wird das Düngemittel gegen den Einfluss von Luftfeuchtigkeit geschützt. Bei granulierten Düngemitteln bleibt die Granalienstruktur intakt, die Granalien neigen nicht zum Verbacken und Verhärten, wodurch das Düngemittel rieselfähig bleibt.

Als zur Formulierung besonders geeignetes erwies sich ein Formulierungsmittel, welches neben Wachsen aus n- und iso-Paraffinen auch pflanzliche Triglyceride enthält. Unter Paraffinen versteht man Alkane oder Gemische aus Alkanen mit 18-75 Kohlenstoffatomen. Bevorzugte Kettenlängen der Paraffine im Rahmen der Erfindung liegen im Bereich C₁₈ bis C₄₀, besonders zwischen C₂₀ und C₃₂. In einer bevorzugten Ausführungsform der Erfindung besteht das Formulierungsmittel aus 25-35% n-Paraffinen, 40-55 % Isoparaffinen und 15-20% pflanzlichen Triglyceriden. Das eingesetzte Paraffinwachs ist kostengünstig verfügbar sowie toxikologisch unbedenklich und biologisch abbaubar. Als pflanzliche Triglyceride werden vorzugsweise Glyceride der Linol-, Linolen-, Öl-, Palmitin- und Stearin-Fettsäure eingesetzt.

Weiterhin überraschend war die Beobachtung, dass durch Zusatz von pflanzlichen Harzen oder deren Derivaten zum paraffinbasierten Wachs eine besonders gleichmäßige Bedeckung des harnstoffhaltigen Düngemittels mit Formulierungsmittel und Ureaseinhibitor erreicht werden kann, was die Lagereigenschaften positiv beeinflusst.

Als besonders vorteilhaft erwies sich dabei der Zusatz von Abietinsäurederivaten, die mit mehrwertigen Alkoholen verestert wurden, vorzugsweise Abietinsäure verestert mit Pentaerythrit. So kann bei einem Harnstoff/Ammoniumsulfat-Granulat durch Zusatz von veresterter Abietinsäure zum Konditionierungsmittel die Wasseraufnahme um mehr als die Hälfte reduziert werden (s. Beispiel 7).

Zur Formulierung können noch weitere, nichttoxische und physiologisch geeignete Hilfs- und Trägerstoffe, Emulgier- oder Dispergiermittel oder Streckmittel (ggf. jeweils in Kombination) eingesetzt werden.

Die erfindungsgemäß eingesetzten Phosphorsäureamidderivate als Ureaseinhibitoren besitzen die allgemeine Formel (I): 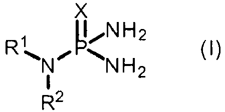 in der :
X = Sauerstoff oder Schwefel;
R¹ und R² unabhängig voneinander Wasserstoff, jeweils substituiertes oder unsubstituiertes C₁-C₈-Alkyl, C₃-C₈-Cycloalkyl/Heterocycloalkyl, C₆-C₁₀-Aryl; C₅-C₁₀-Hetero-aryl, COOR³ mit R³ = R¹, R² bedeuten.

Außerdem können Salze, Tautomere, Polymorphe und Metallkomplexe von Verbindungen der allgemeinen Formel (I), die ureaseinhibierende Wirkung haben, eingesetzt werden.

In einer bevorzugten Ausführungsform der Erfindung werden als Ureaseinhibitoren Verbindungen der allgemeinen Struktur (I) mit X = O, R¹ = H und R² = 2-Nitrophenyl oder substituiertes 2-Nitrophenyl eingesetzt.

Zur weiteren Minimierung der Stickstoffverluste bietet sich der Einsatz von Nitrifikationsinhibitoren an, die den weiteren Abbau des Ammoniums zum leicht auswaschbaren Nitrat hemmen.

Der Nitrifikationsinhibitor ist unter einer oder mehreren der folgenden Verbindungen ausgewählt:
a) Pyrazol-Derivate der allgemeinen Formel (II), oder Salze oder Komplexverbindungen davon: 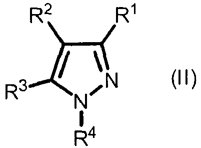 in der
   R¹, R², R³ unabhängig voneinander Wasserstoff, Halogen, C₁-C₈-Alkyl, oder C₃-C₈-Cycloalkyl und R⁴ = Wasserstoff, C₁-C₈-Alkyl, CH₂NHCOR⁵, CH₂OC(O)R⁵, CH₂OR⁵ mit R⁵ = Wasserstoff, C₁-C₈-Alkyl, C₆-C₁₀-Aryl bedeuten,
b) 1H-1,2,4-Triazole, oder deren Salze oder Komplexverbindungen,
c) Dicyandiamid.

Die Erfindung betrifft außerdem ein Verfahren zur Herstellung der erfindungsgemäßen Düngemittelzusammensetzung, das dadurch gekennzeichnet ist, dass,
a) Prills oder Granalien eines harnstoffhaltigen Düngemittels mit einer Suspension aus dem aufgeschmolzenen paraffinbasierten Formulierungsmittel und einem Ureaseinhibitor imprägniert werden
   oder
b) Prills oder Granalien eines harnstoffbasierten Düngemittels mit dem aufgeschmolzenen paraffinbasierten Formulierungsmittel und anschließend mit einem Ureaseinhibitor imprägniert werden,
und dass gegebenenfalls in einem vor- oder nachgelagerten Schritt eine weitere Schicht des paraffinbasierten Formulierungsmittels aufgetragen wird.

Das paraffinbasierte Formulierungsmittel wird bei 40-90 °C aufgeschmolzen und in einer Menge von 0,05-1%, vorzugsweise 0,1-0,5% und der Ureaseinhibitor in einer Menge von 0,01-1%, vorzugsweise 0,02-0,2%, bezogen auf das Gewicht des harnstoffhaltigen Düngemittels, eingesetzt.

Nach dem gleichen Verfahren kann gleichzeitig mit dem Ureaseinhibitor oder in einer separaten Schicht ein Nitrifikationsinhibitor aufgebracht werden.

Die erfindungsgemäßen Düngemittelzusammensetzungen können in Mischeinheiten, in Wirbelschichtapparaturen oder auf Förderbändern hergestellt werden. Eine abschließende Behandlung mit z. B. einem Antibackmittel oder weiteren Hilfsstoffen ist möglich.

Bis zur Ausbringung der erfindungsgemäßen Düngemittelzusammensetzung auf einer landwirtschaftlich genutzten Fläche sind die enthaltenen Ureaseinhibitoren über einen Zeitraum von mindestens drei Monaten lagerstabil.

Zu den harnstoffbasierten Düngemitteln im Sinne der Erfindung zählt zunächst der Harnstoff selbst, der geprillt, granuliert oder in irgendeiner anderen Form kompaktiert vorliegen kann. Neben Harnstoff können aber auch weitere Stickstoffdünger wie Ammoniumsulfat oder Ammoniumnitrat im harnstoffbasierten Düngemittel enthalten sein. Daneben zusätzliche Nährstoffe wie Phosphor oder Kalium sowie auch Wirkstoffe wie z. B. Nitrifikationsinhibitoren (z. B. Dicyandiamid, 1,2,4-Triazol, 3-Methylpyrazol) oder Pflanzenschutzmittel. Daneben kann das harnstoffbasierte Düngemittel auch Hilfsstoffe wie Haftvermittler, Antistaub- oder Antibackmittel enthalten.

Die vorliegende Erfindung soll nun anhand der folgenden Beispiele ohne Beschränkung und somit lediglich zur Veranschaulichung erläutert werden.

### Beispiele

In den folgenden Beispielen bedeuten:
NBTPT = *N*-(n-Butyl)thiophosphorsäuretriamid
2NPT = *N*-(2-Nitrophenyl)phosphorsäuretriamid
4Me2NPT = *N*-(4-Methyl-2-nitrophenyl)phosphorsäuretriamid
iPrPDPC = Isopropyl(diaminophosphoryl)carbamat
3MPD = 3-Methypyrazolderivat
DCD = Dicyandimid
TZ = 1,2,4-Triazol

### Vergleichsbeispiel 1

• Separate Applikation von Wachs und Wirkstoff auf die Oberfläche des Düngemittels In einer Mischtrommel werden 15 kg granulierter Harnstoff auf 40-50 °C erwärmt und unter Mischen 38 g (0,25%) bei 80 °C aufgeschmolzenes Wachs in dünnem Strahl zugegeben. Nach 5 min wird der Ureaseinhibitor als Pulver aufgestäubt und die behandelten Granalien ohne weitere Erwärmung 30 min gemischt.

### Vergleichsbeispiel 2

### • Gleichzeitige Applikation von Wachs und Wirkstoff auf die Oberfläche des Düngemittels

In einer Mischtrommel werden 15 kg granulierter Harnstoff auf 40-50 °C erwärmt und unter Mischen 38 g (0,25%) bei 80 °C aufgeschmolzenes Wachs mit darin suspendiertem Ureaseinhibitor in dünnem Strahl zugegeben. Anschließend wird ohne weitere Erwärmung 30 min gemischt.

### Vergleichsbeispiel 3

### • Wirkstoffverteilung auf dem Düngemittel

Die gleichmäßige Verteilung des Ureaseinhibitors auf der Oberfläche der Düngemittelgranalien wurde mittels HPLC untersucht.

| *Basisdünger* | *Wirkstoff* | | *Wirkstoffgehalt (gef.)* |
|---|---|---|---|
| 20 kg Harnstoff, granuliert | 0,2 %NBTPT | Messung 1: | 0,184% |
| | | Messung 2: | 0,182% |
| | | Messung 3: | 0,184% |
| | | Messung 4: | 0,182% |
| 60 kg Harnstoff, granuliert | 0,05 2NPT | Messung 1: | 0,047% |
| | | Messung 2: | 0,047% |
| | | Messung 3: | 0,052% |
| | | Messung 4: | 0,052% |
| 75 kg Harnstoff, granuliert, mit DCD/TZ | 0,075% 2NPT | Messung 1: | 0,074% |
| | | Messung 2: | 0,078% |
| | | Messung 3: | 0,079% |

### Vergleichsbeispiel 4

• Verschlossene Lagerung (Raumtemperatur) von 1 kg nach Beispiel 1 hergestellten Harnstoffformulierungen mit folgenden Wirkstoffen

| *Basisdünger* | *Startgehalt Wirkstoff* | *Wirkstoffabbau nach 3 Monaten* |
|---|---|---|
| Harnstoff granuliert | 0,09% NBTPT | 0% |
| Harnstoff granuliert | 0,023% 2NPT | 2% |
| Harnstoff granuliert | 0,033% 2NPT | 0% |
| Harnstoff granuliert | 0,046% 2NPT | 6% |
| Harnstoff granuliert | 0,035% 2NPT | 3% |
| | 0,046% 3MPD | 0% |
| Harnstoff granuliert | 0,023% 4Me2NPT | 2% |
| Harnstoff granuliert | 0,036% 4Me2NPT | 3% |
| Harnstoff granuliert | 0,046% 4Me2NPT | 0% |
| Harnstoff granuliert | 0,092% iPrDPC | 8% |
| Harnstoff granuliert, mit DCD/TZ | 0,035% 2NPT | 0% |
| Harnstoff granuliert, mit DCD/TZ | 0,046% 4Me2NPT | 0% |

### Vergleichsbeispiel 5

• Offene Lagerung (unklimatisierter Lagerraum mit wechselnder Temperatur/Luftfeuchte) von 5 kg nach Beispiel 1 und 2 hergestellten Harnstoffformulierungen

| *Basisdünger* | *Startgehalt Wirkstoff* | *Wirkstoffabbau nach 3 Monaten* |
|---|---|---|
| Harnstoff granuliert | 0,046% 2NPT | 5% |
| Harnstoff granuliert | 0,046% 2NPT | 8% |

### Vergleichsbeispiel 6

• Offene Lagerung (unklimatisierte Lagerhalle mit wechselnder Temperatur/Luftfeuchte) von 350 t einer nach Beispiel 2 hergestellten Harnstoffformulierung

| | |
|---|---|
| Basisdünger: | Harnstoffgranulat |
| Wirkstoff: | 0,03% *N-*(2-Nitrophenyl)phosphorsäuretriamid (2NPT) |

| | *Wirkstoffgehalt 2NPT* | | |
|---|---|---|---|
| | *nach 3 Mon.* | *nach 7 Mon.* | *nach 8 Mon.* |
| *Abbau in 20 cm Tiefe* | 7% | 23% | |
| *Abbau in 50 cm Tiefe* | 10% | 13% | |
| *Abbau in 80 cm Tiefe* | 7% | 10% | |
| *Abbau in 2 m Tiefe* | 0% | 0% | 0% |

### Beispiel 7

Die hydrophobierende Wirkung des erfindungsgemäßen Konditionierungsmittels auf einem Harnstoff-Ammoniumsulfatgranulat (50 % Harnstoff/50 % Ammoniumsulfat) wurde in einem Wasseraufnahmetest bei definierter Temperatur und Luftfeuchte nachgewiesen.

Dazu wurden in einer Doppelbestimmung je 50 g der mit 0,3 % Konditionierungsmittel hydrophobierten Granalien in kleine Kristallisierschalen eingewogen und im Klimaschrank gelagert und die Wasseraufnahme gravimetrisch bestimmt.

**Wasseraufnahme nach 24 h bei 25 °C und 80 % Luftfeuchte**

| *Konditionierungsmittel* | *Massezuwachs (Wasseraufnahme)* |
|---|---|
| unkonditioniert | 32,8% |
| Gemisch aus n-/iso Paraffinen und Triglycerid | 5,4% |
| Gemisch aus n-/ iso Paraffinen; Triglycerid und veresterter Abietinsäure | 2,2% |

**Wasseraufnahme nach 2 Wochen bei 25 °C und 60 % Luftfeuchte**

| *Konditionierungsmittel* | *Massezuwachs (Wasseraufnahme)* |
|---|---|
| unkonditioniert | 27,2% |
| Gemisch aus n-/iso Paraffinen | 15,2% |
| Gemisch aus n-/ iso Paraffinen und Triglycerid | 3,6% |
| Gemisch aus n-/ iso Paraffinen; Triglycerid und veresterter Abietinsäure | 2,5% |

## Patentansprüche

1. Düngemittelzusammensetzung, enthaltend harnstoffbasierte Prills oder Granalien, mindestens ein Phosphorsäureamidderivat als Ureaseinhibitor auf der Oberfläche der Prills oder Granalien und ein Formulierungsmittel, das parafinbasierte Wachse und pflanzliche Triglyceride umfasst, zur Imprägnierung der Prills- oder Granalienoberfläche.

2. Düngemittelzusammensetzung nach Anspruch 1, wobei die paraffinbasierten Wachse 25-35 % n-Paraffine und 40-55 % iso-Paraffine enthalten und die Kohlenstoffanzahl der Paraffine zwischen C₁₈ und C₄₀, vorzugsweise zwischen C₂₀ und C₃₂ liegt, und wobei als pflanzliches Triglycerid Glyceride der Linol-, Linolen-, Öl-, Palmitin- und Stearin-Fettsäure in einem Gehalt von 15-20% eingesetzt werden.

3. Düngemittelzusammensetzung nach Anspruch 1 oder 2, wobei dem parafinbasierten Wachs Abietinsäure verestert mit Pentaerythrit zugesetzt ist.

4. Düngemittelzusammensetzung nach Anspruch 1, wobei der Ureaseinhibitor eine Verbindung der allgemeinen Struktur (I) ist 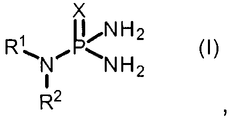 in der :
X = Sauerstoff oder Schwefel;
R¹ und R² unabhängig voneinander Wasserstoff, jeweils substituiertes oder unsubstituiertes C₁-C₈-Alkyl, C₃-C₈-Cycloalkyl/Heterocycloalkyl, C₆-C₁₀-Aryl, C₅-C₁₀-Heteroaryl, COOR³ mit R³ = R¹, R² bedeuten,
sowie Salze, Tautomere, Polymorphe und Metallkomplexe von Verbindungen der allgemeinen Formel (I), die ureaseinhibierende Wirkung haben.

5. Düngemittelzusammensetzung mit einem Ureaseinhibitor entsprechend Anspruch 4, wobei in der allgemeinen Struktur (I) X = O, R¹ = H und R² = 2-Nitrophenyl oder substituiertes 2-Nitrophenyl bedeuten.

6. Düngemittelzusammensetzung nach einem der Ansprüche 1-5, **dadurch gekennzeichnet, dass** als weiterer Wirkstoff mindestens ein Nitrifikationsinhibitor in einer zur Nitrifikationsinhibition wirksamen Menge enthalten ist.

7. Düngemittelzusammensetzung nach Anspruch 6, **dadurch gekennzeichnet, dass** der Nitrifikationsinhibitor unter einer oder mehreren der folgenden Verbindungen ausgewählt ist:
a) Pyrazol-Derivate der allgemeinen Formel (II), oder Salze oder Komplexverbindungen davon: 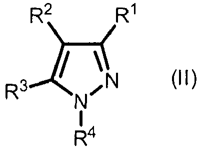 in der
R¹, R², R³ unabhängig voneinander Wasserstoff, Halogen, C₁-C₈-Alkyl, oder C₃-C₈-Cycloalkyl und R⁴ = Wasserstoff, C₁-C₈-Alkyl, CH₂NHCOR⁵, CH₂OC(O)R⁵, CH₂OR⁵ mit R⁵ = Wasserstoff, C₁-C₈-Alkyl, C₆-C₁₀-Aryl bedeuten
b) 1 H-1,2,4-Triazole, oder deren Salze oder Komplexverbindungen,
c) Dicyandiamid.

8. Verfahren zur Herstellung der Düngemittelzusammensetzung nach Anspruch 1, **dadurch gekennzeichnet, dass**
a) Prills oder Granalien eines harnstoffbasierten Düngemittels mit einer Suspension aus dem aufgeschmolzenen paraffinbasierten Formulierungsmittel entsprechend den Ansprüchen 1-3 und einem Ureaseinhibitor entsprechend den Ansprüchen 4 oder 5 imprägniert werden
oder
b) Prills oder Granalien eines harnstoffbasierten Düngemittels mit dem aufgeschmolzenen paraffinbasierten Formulierungsmittel entsprechend den Ansprüchen 1-3 und anschließend mit einem Ureaseinhibitor entsprechend den Ansprüchen 4 oder 5 imprägniert werden und das gegebenenfalls in einem vor- oder nachgelagerten Schritt eine weitere Schicht des paraffinbasierten Formulierungsmittels aufgetragen wird.

9. Verfahren nach Anspruch 8 **dadurch gekennzeichnet, dass** die Formulierung in Mischeinheiten, in Wirbelschichtapparaturen oder auf Förderbändern durchgeführt wird.

10. Verfahren zur Herstellung der Düngemittelzusammensetzung nach den Ansprüchen 8 bis 9 **dadurch gekennzeichnet, dass** das aufgeschmolzene paraffinbasierte Formulierungsmittel eine Temperatur von 40-90 °C aufweist und in einer Menge von 0,05-1 %, vorzugsweise 0,1-0,5 %, bezogen auf das Gewicht des harnstoffbasierten Düngemittels, eingesetzt wird und der Ureaseinhibitor nach den Ansprüchen 4 oder 5 in einer Menge von 0,01-1 %, vorzugsweise 0,02-0,2 %.

11. Verfahren zur Herstellung der Düngemittelzusammensetzung nach den Ansprüchen 8 bis 10 **dadurch gekennzeichnet, dass** zusammen mit dem Ureaseinhibitor oder in einer separaten Schicht ein Nitrifikationsinhibitor entsprechend den Ansprüchen 6 oder 7 aufgebracht oder bereits in die Schmelze des harnstoffhaltigen Düngemittels vor dem Formgebungsprozess zugesetzt wird.

## Claims

1. Fertiliser composition containing urea-based prills or granules, at least one phosphoric acid amide derivative as a urease inhibitor on the surface of the prills or granules, and a formulating agent that comprises paraffin-based waxes and vegetable triglycerides for impregnating the surface of the prills or granules.

2. Fertiliser composition according to claim 1, wherein the paraffin-based waxes contain 25-35 % n-paraffins and 40-55 % isoparaffins, and the carbon number of the paraffins is between C₁₈ and C₄₀, preferably between C₂₀ and C₃₂, and wherein glycerides of linoleic fatty acid, linolenic fatty acid, oleic fatty acid, palmitic fatty acid and stearic fatty acid are used as the vegetable triglyceride in a percentage of 15-20 %.

3. Fertiliser composition according to either claim 1 or claim 2, wherein abietic acid esterified with pentaerythritol is added to the paraffin-based wax.

4. Fertiliser composition according to claim 1, wherein the urease inhibitor is a compound of the general structure (I) 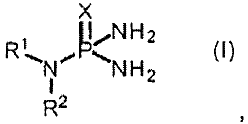 in which:
X = oxygen or sulfur;
R¹ and R², independently of one another, represent hydrogen, in each case substituted or unsubstituted C₁-C₈ alkyl, C₃-C₈ cycloalkyl/heterocycloalkyl, C₆-C₁₀ aryl, C₅-C₁₀ heteroaryl, COOR³ where R³ = R¹, R²,
and salts, tautomers, polymorphs and metal complexes of compounds of the general formula (I) which have a urease-inhibiting effect.

5. Fertiliser composition comprising a urease inhibitor in accordance with claim 4, wherein, in the general structure (I), X = O, R¹ = H and R² = 2-nitrophenyl or substituted 2-nitrophenyl.

6. Fertiliser composition according to any of claims 1 to 5, **characterised in that** at least one nitrification inhibitor is contained as an additional active ingredient in an amount that is effective for inhibiting nitrification.

7. Fertiliser composition according to claim 6, **characterised in that** the nitrification inhibitor is selected from one or more of the following compounds:
a) pyrazole derivatives of the general formula (II), or salts of complex compounds thereof: 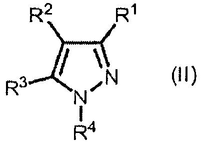 in which
R¹, R², R³, independently of one another, represent hydrogen, halogen, C₁-C₈ alkyl or C₃-C₈ cycloalkyl, and R⁴ = hydrogen, C₁-C₈ alkyl, CH₂NHCOR⁵, CH₂OC(O)R⁵, CH₂OR⁵ where R⁵ = hydrogen, C₁-C₈ alkyl, C₆-C₁₀ aryl,
b) 1 H-1,2,4 triazoles, or salts or complex compounds thereof,
c) dicyandiamide.

8. Method for producing the fertiliser composition according to claim 1, **characterised in that**
a) prills or granules of a urea-based fertiliser are impregnated with a suspension of the melted paraffin-based formulating agent in accordance with claims 1 to 3 and a urease inhibitor in accordance with either claim 4 or claim 5,
or
b) prills or granules of a urea-based fertiliser are impregnated with the melted paraffin-based formulating agent in accordance with claims 1 to 3 and then impregnated with a urease inhibitor in accordance with either claim 4 or claim 5, and **in that**, optionally, in an upstream or downstream step, a further layer of the paraffin-based formulating agent is applied.

9. Method according to claim 8, **characterised in that** the formulating is carried out in mixing units, in fluidised bed apparatuses or on conveyor belts.

10. Method for producing the fertiliser composition according to claims 8 and 9, **characterised in that** the melted paraffin-based formulating agent has a temperature of 40-90 °C and is used in an amount of 0.05-1 %, preferably 0.1-0.5 %, based on the weight of the urea-based fertiliser composition, and the urease inhibitor according to either claim 4 or claim 5 is used in an amount of 0.01-1 %, preferably 0.02-0.2 %.

11. Method for producing the fertiliser composition according to claims 8 to 10, **characterised in that**, together with the urease inhibitor or in a separate layer, a nitrification inhibitor in accordance with either claim 6 or claim 7 is applied or is already added into the melt of the urea-containing fertiliser prior to the shaping process.

## Revendications

1. Composition d'engrais, contenant des billes ou des granulés à base d'urée, au moins un dérivé d'amide de l'acide phosphorique en tant qu'inhibiteur d'uréase sur la surface des billes ou des granulés et un agent de formulation, qui comprend des cires à base de paraffine et des triglycérides végétaux, pour l'imprégnation de la surface des billes ou des granulés.

2. Composition d'engrais selon la revendication 1, dans laquelle les cires à base de paraffine contiennent 25 à 35 % de n-paraffines et 40 à 55 % d'iso-paraffines, et le nombre de carbones des paraffines est compris entre C₁₈ et C₄₀, de préférence entre C₂₀ et C₃₂, et, en tant que triglycéride végétal, des glycérides des acides gras linoléique, linolénique, oléique, palmitique et stéarique sont utilisés en une teneur de 15 à 20 %.

3. Composition d'engrais selon la revendication 1 ou 2, dans laquelle de l'acide abiétique estérifié avec du pentaérythritol est ajouté à la cire à base de paraffine.

4. Composition d'engrais selon la revendication 1, dans laquelle l'inhibiteur d'uréase est un composé de structure générale (I) 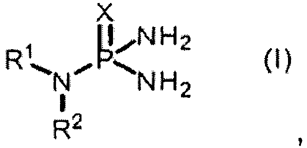 dans laquelle :
X = oxygène ou soufre ;
R¹ et R² signifient indépendamment l'un de l'autre hydrogène, alkyle en C₁-C₈, cycloalkyle/hétérocycloalkyle en C₃-C₈, aryle en C₆-C₁₀, hétéroaryle en C₅-C₁₀, COOR³ avec R³ = R¹, R², chacun substitué ou non substitué,
ainsi que les sels, tautomères, polymorphes et complexes métalliques de composés de formule générale (I), qui ont un effet d'inhibition de l'uréase.

5. Composition d'engrais contenant un inhibiteur d'uréase selon la revendication 4, dans laquelle, dans la structure générale (I), X = O, R¹ = H et R² = 2-nitrophényle ou 2-nitrophényle substitué.

6. Composition d'engrais selon l'une quelconque des revendications 1 à 5, **caractérisée en ce qu'**au moins un inhibiteur de nitrification est contenu en une quantité efficace pour l'inhibition de la nitrification en tant qu'agent actif supplémentaire.

7. Composition d'engrais selon la revendication 6, **caractérisée en ce que** l'inhibiteur de nitrification est choisi parmi un ou plusieurs des composés suivants :
a) les dérivés de pyrazole de formule générale (II), ou leurs sels ou composés complexes : 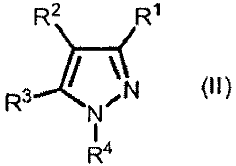 dans laquelle
R¹, R², R³ signifient indépendamment les uns des autres hydrogène, halogène, alkyle en C₁-C₈ ou cycloalkyle en C₃-C₈, et R⁴ = hydrogène, alkyle en C₁-C₈, CH₂NHCOR⁵, CH₂OC(O)R⁵, CH₂OR⁵ avec R⁵ = hydrogène, alkyle en C₁-C₈, aryle en C₆-C₁₀,
b) les 1 H-1,2,4-triazoles, ou leurs sels ou composés complexes,
c) le dicyandiamide.

8. Procédé de fabrication de la composition d'engrais selon la revendication 1, **caractérisé en ce que**
a) des billes ou des granulés d'un engrais à base d'urée sont imprégnés avec une suspension de l'agent de formulation à base de paraffine fondu selon les revendications 1 à 3 et un inhibiteur d'uréase selon la revendication 4 ou 5,
ou
b) des billes ou des granulés d'un engrais à base d'urée sont imprégnés avec l'agent de formulation à base de paraffine fondu selon les revendications 1 à 3, puis avec un inhibiteur d'uréase selon la revendication 4 ou 5, et une couche supplémentaire de l'agent de formulation à base de paraffine est éventuellement appliquée lors d'une étape en amont ou en aval.

9. Procédé selon la revendication 8, **caractérisé en ce que** la formulation est réalisée dans des unités de mélange, dans des appareils à lit fluidisé ou sur des bandes de transport.

10. Procédé de fabrication de la composition d'engrais selon les revendications 8 à 9, **caractérisé en ce que** l'agent de formulation à base de paraffine fondu présente une température de 40 à 90 °C, et est utilisé en une quantité de 0,05 à 1 %, de préférence de 0,1 à 0,5 %, par rapport au poids de l'engrais à base d'urée, et l'inhibiteur d'uréase selon la revendication 4 ou 5 en une quantité de 0,01 à 1 %, de préférence de 0,02 à 0,2 %.

11. Procédé de fabrication de la composition d'engrais selon les revendications 8 à 10, **caractérisé en ce que** conjointement avec l'inhibiteur d'uréase ou dans une couche séparée, un inhibiteur de nitrification selon la revendication 6 ou 7 est appliqué ou est déjà ajouté dans la masse fondue de l'engrais contenant de l'urée avant le processus de façonnage.
